# EUROPÄISCHE PATENTSCHRIFT

(11) **EP 0 548 589 B1**
(45) Veröffentlichungstag und Bekanntmachung des Hinweises auf die Patenterteilung: **10.01.1996**
(21) Anmeldenummer: 92120368.3
(22) Anmeldetag: 28.11.1992
(51) Int. Cl.: F21V 21/26

(54) **Medizinische Leuchte**
Medical lamp
Lampe médicale

(30) Priorität: 21.12.1991 DE 4142634
(43) Veröffentlichungstag der Anmeldung: 30.06.1993
(73) Patentinhaber: Heraeus Med GmbH, D-63450 Hanau (DE)
(72) Erfinder: Witt, Jürgen, Dr., W-8752 Mömbris (DE)
(74) Vertreter: Kühn, Hans-Christian

(56) Entgegenhaltungen:
- EP-A- 0 178 078
- FR-A- 2 536 832
- US-A- 4 444 298
- PATENT ABSTRACTS OF JAPAN vol. 12, no. 311 (M-734)24. August 1988, & JP-A-63 082 873 (AISIN SEIKI CO LTD) 13. April 1988

## Beschreibung

Die vorliegende Erfindung bezieht sich auf eine Operationsleuchte gemäß dem Oberbegriff des Anspruchs 1. Solche Operationsleuchten sind an einem Arm beweglich aufgehängt und sollen in einer einmal eingestellten Arbeitsstellung sicher gehalten werden, aber auch für das Verschwenken in eine neue Arbeitsstellung wieder leicht lösbar und verstellbar sein. In einem Leuchtenkörper der Operationsleuchte sind wegen der Schattenfreiheit im zu beleuchtenden Operationsfeld mehrere Einzelscheinwerfer angeordnet, wobei möglicherweise durch zusätzliche Einbauten wie Aufzeichnungsgeräte, Fokussiereinrichtungne usw. der einzelne Leuchtenkörper eine verhältnismäßig große Masse erhält, die sich je nach Art der Einbauten verändert und auch zu einer Schwerpunktverlagerung führen kann. Es resultieren hieraus Erhöhungen der Trägheitsmomente und ggf. Ungleichgewichte im Hinblick auf die Verstellbarkeit. Große Leuchten weisen als Lichtquellen mehrere Einzelscheinwerfer auf. Diese erzeugen Wärme, deren Abgabe an das Operationsfeld durch Einrichtungen wie Kaltlichtspiegel, Filter usw. verhindert oder gemindert wird, wodurch sich die Masse des Leuchtenkörpers weiter erhöht. Dennoch soll der Leuchtenkörper im Operationsraum für eine Lichtabgabe aus jeder gewünschten Richtung frei und leicht beweglich aufgehängt werden. In der eingestellten Position muß sie sofort nach der Verstellbewegung und ohne Nachbewegung fixiert bleiben.

Es ist bekannt, Operationsleuchten an der Decke mit einem vertikalen Drehzapfen aufzuhängen, durch den auch Zu- und Ableitungen verdeckt geführt werden. An diesen Zapfen schließen sich ein oder mehrere im wesentlichen horizontale oder zur Horizontalen geneigte Arme an, die miteinander durch Gelenke mit vertikalen oder zur Vertikalen geneigte Achsen verbunden sind. Der Leuchtenkörper befindet sich in der Praxis oft in einem gabelförmigen freien Ende des letzten Armes alle die bewegliche Aufhängung bildenden Arme und ist in der Gabel in einer im Normalzustand horizontalen Achse schwenkbar.

Eine solche Operationsleuchte mit mehreren Leuchtenkörpern an einem Befestigungspunkt ist beispielsweise aus der die DE-PS 1 193 897 bekannt.

Durch Schwenken um die vertikalen Achsen wird ein mehr oder weniger großer seitlicher Abstand vom Befestigungspunkt erzielt. Der vertikale Abstand zum Befestigungspunkt wird durch Gelenke zwischen den Armen mit im Normalzustand horizontalen Achsen verstellbar gemacht.

Um diese horizontalen Achsen wirkt sich mit zunehmender seitlicher Auslenkung vom Befestigungspunkt das von der Masse des Leuchtenkörpers ausgehende Moment aus, was auszubalancieren ist.

Es ist schon vorgeschlagen worden, das Problem durch an der Decke des Operationsraumes angebrachte Schienen zu lösen, auf denen ein seitlich verfahrbarer Wagen aufgehängt ist, an dem sich mit einem weiteren Gestänge der Leuchtenkörper befindet (vgl. DE-PS 863 528, DE-PS 1 020 288, DE-PS 1 058 448 oder DE-PS 1 102 673). Bei dieser Konstruktion der Aufhängung von Operationsleuchten entstehen zusätzliche Problemen dadurch, daß der Operationstisch als das zu beleuchtende Feld zu den Schienen ausgerichtet sein muß. Ist die Schiene fest im Operationssaal angebracht, dann ist der Bewegungsspielraum der Operationsleuchte eingeschränkt. Ein weiteres, schwerwiegenderes Problem entsteht dadurch, daß ein über einem Operationsfeld offenes Schienensystem eine Quelle septischer Verschmutzung darstellt, die im sterilen Operationsraum nicht hingenomen werden kann.

Um bei der demgegenüber gut kapselbaren Armaufhängung bleiben zu können und dennoch die bei großer Auslenkung auftretenden Probleme gering zu halten, ist vorgeschlagen worden, mehrere Befestigungspunkte an der Decke vorzusehen (DE-PS 927 864 oder DE-PS 1 156 363). Diese Lösungen minimalisieren das Problem des Ausbalancierens, schränken aber die Beweglichkeit und die leichte Verstellbarkeit einer Operationsleuchte ein. In der Praxis haben sich bislang diese Lösungen nicht durchgesetzt. Der Gegenstand der vorliegenden Erfindung ist jedoch auch auf Operationsleuchten gerichtet, die an mehreren Befestigungspunkten aufgehängt sind.

Ublicherweise wird in der Praxis dem hier anstehenden Problem des Gewichtsausgleichs durch eine bewährte Ausbalancierung durch Anordnung von Federn in den Armen der Aufhängung begegnet. Jeder in der Normallage horizontalen Achse wird in den Gelenken zwischen den Armen eine in einem der angrenzenden Arme sich erstreckende Feder zugeordnet, die mittels eines Hebels mit dem angelenktem Arm so verbunden ist, daß die Federkraft das angelenkte Gewicht ausbalanciert (vgl. DE-PS 097 928, DE-PS 1 810 552). Dieser Federgewichtsausgleich kann keine vollkommene Lösung sein. Die nicht lineare Federcharakteristik und die mit größer werdendem Abstand vom Befestigungspunkt wachsende Zunahme des Gewichtsmoments lassen sich nicht vollständig aufeinander abstimmen, zumal der Abstand vom Befestigungspunkt überwiegend von der Bewegung um die vertikalen Achsen der Aufhängung abhängt. Es muß daher stets mit einem teilweise nicht ausgleichbaren Restmoment gerechnet werden, was zum stabilen Fixieren des Leuchtenkörpers in anderer Weise aufgefangen und gehalten werden muß. Hierzu ist schon früh (nämlich in der DE-PS 1 012 571) vorgeschlagen worden, die Kippbewegung des Leuchtenkörpers um ein ein im wesentlichen horizontales Gelenk dadurch zu verhindern, daß die Ausgleichsfeder nach außen verlegt und mit einem von Hand zu betätigenden Spindeltrieb kombiniert wird. Jedes Verstellen bedingt dann aber ein Drehen von Hand an der Spindel. Eine schnelle Bewegung um das derart überbrückte Gelenk ist nicht möglich. Nun verlangen aber Operateure gerade eine schnelle Korrekturmöglichkeit des Lichteinfalls im Verlauf einer Operation, um das Licht der jeweiligen Situation sofort anpassen zu können. Jede Zahnarztleuchte muß bereits diese Möglichkeit bieten.

Motorische Verstellungen mit selbsthemmenden Getriebemotoren in den Armen der Aufhängung ermöglichen zwar die gewünschte Verstellung in Abhängigkeit von kleinen Ausschlagbewegungen eines Griffbügels am Leuchtenkörper in Richtung der gewünschten Einstellungsbewegung (DE-PS 1 797 040), aber diese motorische Verstellung hat häufig eine noch zu lange Ansprechzeit. Die begrenzte Motorgeschwindigkeit bewirkt keine sofortige Neueinstellung, wobei ein zugehöriger Nachlauf-Regelkreis optimiert werden muß, damit der erreichte Endpunkt der Bewegung nicht überfahren wird, was eine Nachregelung erforderlich macht. In der Praxis wird deshalb häufig die freie, von Hand direkt vornehmbare Verstellbarkeit einer Operationsleuchte bevorzugt. Um für diese Bedienbarkeit eine Erleichterung zu schaffen, ist gemäß DE-OS 32 43 709 vorgeschlagen worden, die Gelenke für die Halterung des Leuchtenkörpers mit einer Bremse zu versehen, die über einen Elektromagneten gelöst werden kann, wenn der Operateur oder eine andere Bedienungsperson am Leuchtenkörper einen Sensor betätigt. In der Praxis muß dabei mit einer von der Beanspruchung der Verstellmöglichkeit abhängigen Abnutzung der mittels Haftreibung gegeneinander wirkenden Bremselemente gerechnet werden, wobei ein zunehmender Verschleiß der Bremselemente bereits in einem einzigen Gelenk dazu führt, daß die Leuchte nicht mehr betriebssicher ist.

Der Erfindung liegt die Aufgabe zu Grunde, für eine in einem Operationsraum zumindest an einem Befestigungspunkt beweglich angebrachte Operationsleuchte mit einer aus um mehrere vertikale und in Normalstellung horizontale Achsen gelenkig miteinander verbundenen Armen bestehenden Aufhängung eine, für jede Verstellbewegung lösbare, sichere Arretierung der durch den Leuchtenkörper belasteten Gelenke verfügbar zu machen, die praktisch abnutzungsfrei ist und sowohl kostengünstig herzustellen, als auch wartungsarm zu betreiben ist.

Dieser Aufgabe wird durch die kennzeichnenden Merkmale des Anspruchs 1 gelöst. Der Ringkanal wird mit einer elektroviskosen Flüssigkeit gefüllt. Ein mit dem anderen Gelenkteil verbundener Vorsprung ist in die elektroviskose Flüssigkeit eingetaucht. Der Ringkanal und der Vorsprung bilden ein gegenüber den anderen Teilen isoliertes elektrisches Polpaar zum Anlegen einer Spannung an die elektrostatische Flüssigkeit. Die Spannungsversorgung ist zwischen Null und einem Höchstwert so variabel, daß die elektroviskose Flüssigkeit zwischen einem vollkommen flüssigen und einem vollkommen festen Zustand eingestellt werden kann. Die Einstellung kann über einen steuerbaren Schalter vorgenommen werden, dessen Steuereingang mit einem bei Verstellung der Leuchtenposition betätigten Sensor und ggf. mit einem Regelkreis verbunden ist, in dem ein Vergleich der Ausrichtung des Leuchtenkörpers mit einer vorgegebenen Führungsgröße, wie z.B. der erwünschten, der Abstrahlrichtung entsprechenden Winkelstellung vorgenommen wird, wobei eine Regelabweichung zu einer Signalabgabe an den Steuereingang führt.

Elektroviskose Flüssigkeiten sind bekannt (z.B. DE-OS 28 02 494, DE-OS 33 10 959, DE-OS 35 17 281). Bei der Anwendung einer unter Spannung steuerbaren Viskosität einer Kupplungsflüssigkeit, die in einem Ringkanal im Gelenk zwischen Aufhängungsarmen einer Operationsleuchte vorgesehen sind, ergeben sich erhebliche Vorteile. Insbesondere wird es durch die Erfindung möglich, einen kontinuierlichen Übergang von einem völlig blockierten Gelenk zu einem freigegebenen Gelenk elektrisch zu steuern. Der Übergang ist dabei je nach Art und Stärke des eingesetzten Federausgleichs zwischen "weich" und "hart", das heißt, verzögerungsfrei, einstellbar.

Weitere Einzelheiten, Merkmale und Vorteile der Erfindung ergeben sich aus den Unteransprüchen und der nachfolgenden Beschreibung der Zeichnung, in der ein Ausführungsbeispiel der Erfindung dargestellt ist.

Ein wesentlicher Vorteil ergibt sich gegenüber elektromagnetisch betätigbaren Arretierungselementen aus der praktisch vernachlässigbaren Abstrahlung von Störimpulsen des elektromagnetischen Feldes, die im Operationsaal aufgrund der dort benutzten elektrischen und elektronischen Geräten zu unerwünschten Störungen führen würden.

Es zeigen
Fig. 1 als Übersichtszeichnung beispielhaft eine Aufhängung einer Kombination von mehreren Operationsleuchten an einem Deckenzapfen,
Fig. 2 schematisch im Schnitt ein Gelenk gemäß der vorliegenden Erfindung und
Fig. 3 in perspektivischer auseinander gezogener Darstellung die Teile in ihrem gegenseitigen Zusammenwirken.

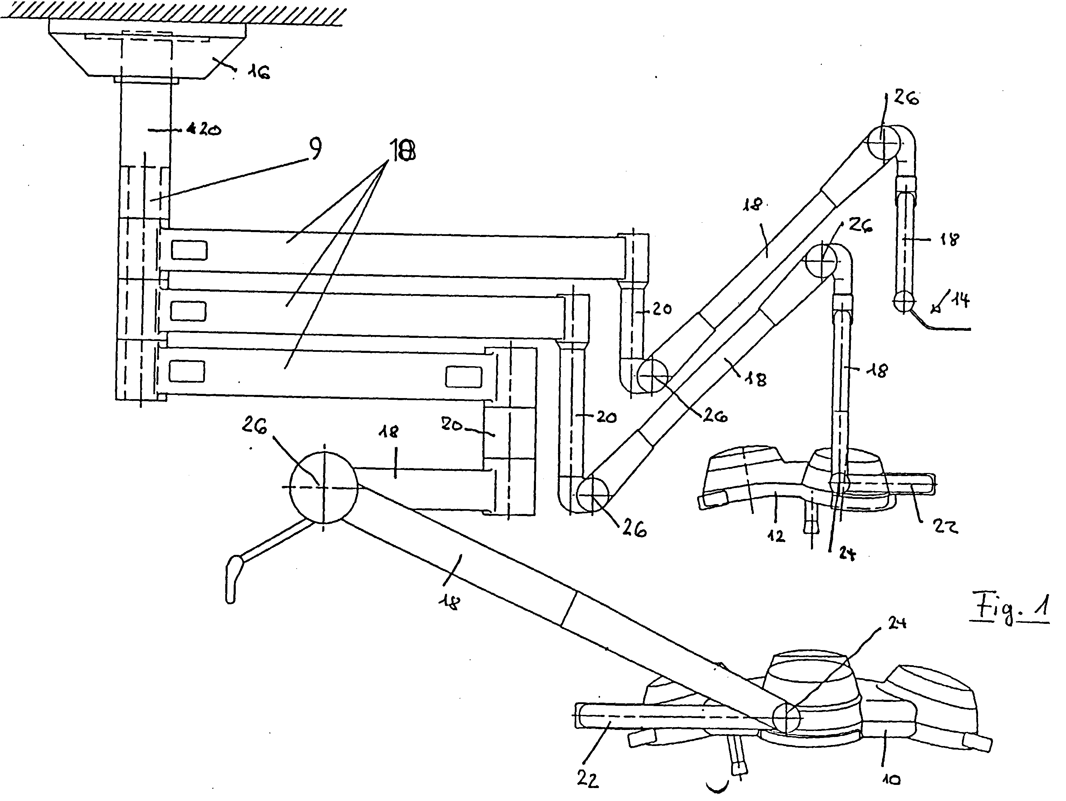

Aus Fig. 1 geht eine übliche bewegliche Aufhängung einer oder mehrerer Leuchtenkörper 10 und 12 sowie anderer chirurgischer Geräte 14 an einer Deckenbefestigung 16 hervor. Die Aufhängung besteht aus Armen 18 und Zapfen 20. Die Leuchtenkörper 10 und 12 sind an einer vollständigen oder halben Gabel 22 um eine Achse 24 schwenkbar, die im Normalzustand horizontal verläuft, aber je nach Positionierung des Leuchtenkörpers 10 oder 12 im Bezug auf einen hier nicht dargestellten Operationstisch auch jede beliebige Lage im Raum einnehmen kann.

Die Zapfen 20 weisen vertikale Drehachsen auf, um welche die Arme 18 verhältnismäßig leicht im Vergleich zu Gelenken 26 mit horizontaler Achse geschwenkt werden. Jedoch ist aus dem Stand der Technik, so aus den ober erwähnten DE-PS 927 864, DE-PS 1 156 365 und der DE-PS 1 156 728 bekannt, daß bei der Beweglichkeit einer Operationsleuchte um diese Gelenke mit vertikaler Achse in der Praxis Probleme auftreten. Die vorliegende Erfindung kann deshalb auch in diesen Zapfen 20 statt den in den genannten Schriften Lösungen mit Vorteil eingesetzt werden.

Im wesentlichen ist jedoch an einen Einsatz in jenen Gelenken 26 mit angrenzenden Armen 18 gedacht, die ebenso wie normalerweise die Achsen 24 im wesentlichen horizontal ausgerichtet sind. Um diese Gelenke wirken Momente, die sich aus dem Gewicht der an den Armen aufgehängten Geräte 14 oder Leuchtenkörper 10, 12 ergeben. Dies gilt insbesondere dann, wenn ein Leuchtenkörper 10, 20 in eine weit vom Befestigungspunkt 16 entfernte Position gebracht wird, so daß benachbarte Arme 18 zueinander eine gestreckte oder nahezu gestreckte Position einnehmen. Zwar wird bei der Verwirklichung der Erfindung daran gedacht, die aus dem Stand der Technik bekannten Federausgleichs-Arme zu verwenden, so daß ein wesentlicher Momentenausgleich von den im Innern der Arme untergeordneten Federn erfolgt. Aber die hierbei unvermeidbar unausgeglichenen verbleibenden Restmomente erfordern zusätzliche Maßnahmen. Während die in dieser Hinsicht bekannten Maßnahmen jedoch stets noch einen Federausgleich voraussetzen und nur als zusätzliche Maßnahme angewendet werden können, ist es für eine elektroviskose Einrichtung gemäß der vorliegenden Erfindung in den Gelenken 26 durchaus wegen der Qualitäten der Erfindung denkbar, sogar auf einen Federausgleich oder andere Unterstützungen zumindest teilweise zu verzichten.

In jedem Gelenk 26 gibt es ein aufhängeseitiges und ein leuchtenseitiges Element des Gelenks, die miteinander um eine Gelenkachse verbunden sind. Bei der Anwendung der vorliegenden Erfindung ist es gleichgültig, welches Gelenkelement welcher Seite zugeordnet wird, der gewichtsverursachenden oder der gewichtstragenden Seite. Auch die Zuordnung eines Federausgleichs kann dem aufhängungsseitigen oder dem leuchtenseitigen Arm zugeordnet werden. Deshalb und weil die Gelenke schon zur Wahrung der Asepsis im Operationssaal vollständig gekapselt sind, können die beiden notwendigen Gelenkelemente als miteinander vertauschbar angesehen werden.

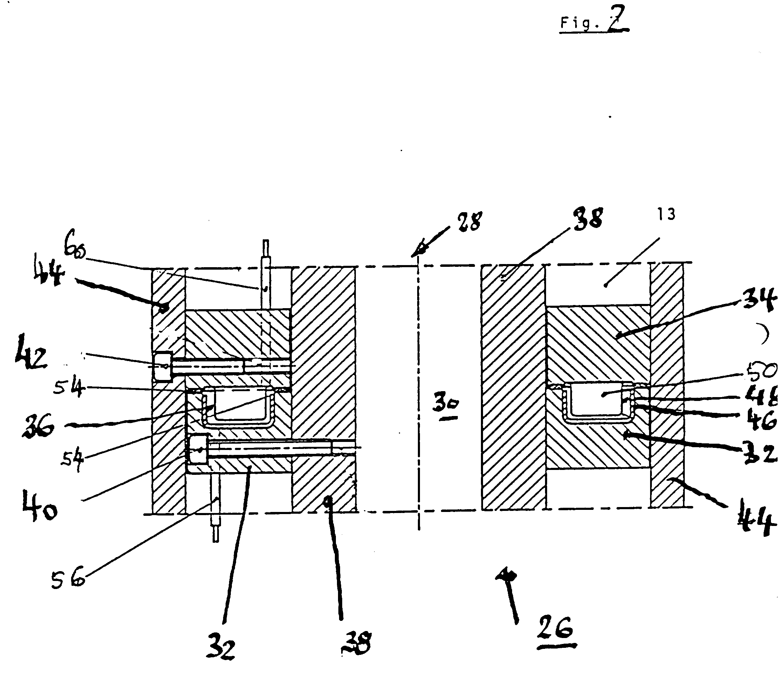

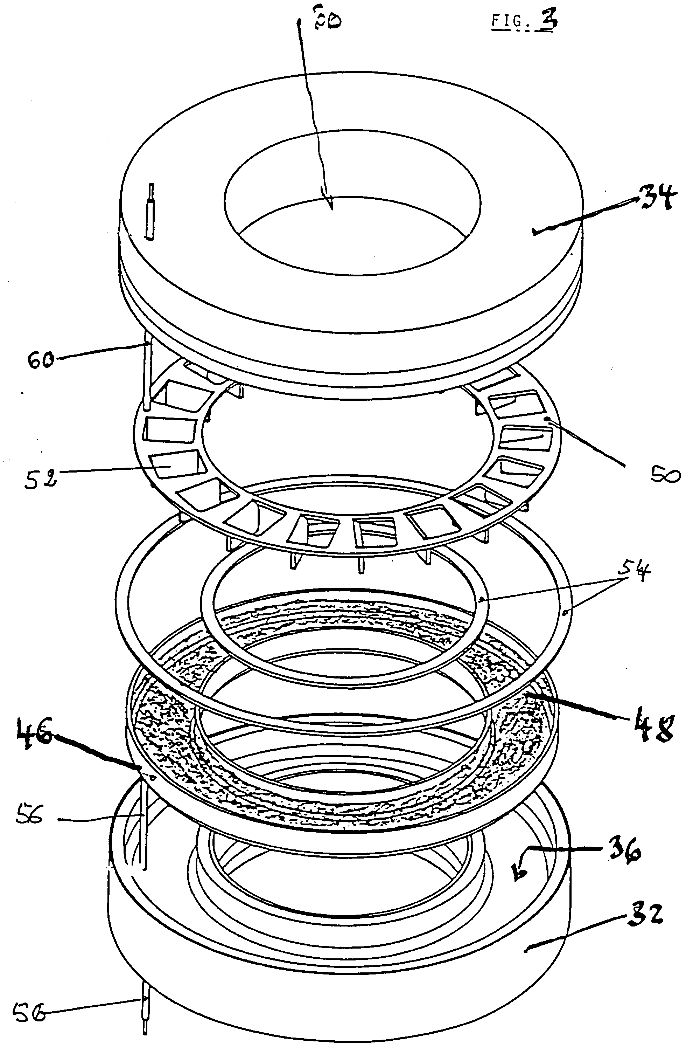

Die gemäß der Erfindung modifizierten Gelenkelemente werden nachstehend näher anhand der Fig. 2 und 3 beschrieben. In Fig. 2 ist ein Schnitt durch ein ein-achsiges Gelenk 26 mit einer Glenkachse 28 zu sehen. Die Fig. 3 zeigt die Teile des Gelenks 26 in auseinandergezogener perspektivischer Darstellung, aus der die relative Lager der Einzelteile und ihre Funktionsverbindung erkennbar ist. In diesem Ausführungsbeispiel ist zur vielseitigen Verwendung und zur Durchführung von Kabeln, Schläuchen o.ä. das Gelenk 26 ringförmig mit einer zentralen Öffnung 30 ausgebildet, in der sich somit die Achse 28 frei befindet. Radial nach außen ist das Gelenk von zwei ineinander greifenden Gehäusehälften (Gelenkteile oder Ringteile) 32 und 34, die im obigen Sinne vertauschbar an die Arme 18 angeschlossen werden können. Diese Gehäusehälften bilden jede für sich einen zunächst offenen Ringkanal 36, der beim Zusammenbau (Fig. 2) zu einem geschlossenen Ringkanal 36 wird. Die in Fig. 2 und 3 untere Gehäusehälfte 32 wird mit einem inneren Gelenkrohr 38 mit einem Bolzen 42 und mit einem äußeren Gelenkrohr 44 verbunden. Die beiden Gelenkrohre 38 und 44 sind um die gemeinsame Schwenkachse 28 gegeneinander verdrehbar und werden jeweils mit einem der in Fig. 2 nicht dargestellten Arme 18 verbunden. Das Gelenk 26 ist die um die Achse 28 gelenkige Verbindung zwischen zwei Armen 18 (Fig. 1).

In dem Ringkanal 36 befindet sich eine Ringwanne 46 zur Aufnahme einer elektroviskosen Flüssigkeit. Ein Lamellenring 50 ist mit der Gehäusehälfte 34 mechanisch verbunden, aber gegenüber dieser und der unteren Gehäusehälfte 32 und dem Ringkanal 36 elektrisch isoliert. Dies geschieht durch Isolierringe von denen zwei Isolierringe 54 schematisch eingezeichnet sind.

Mechanisch ist der Lamellenring 50 mit der einen Gehäusehälfte 34 und die Ringwanne 46 mit der anderen Gelenkhälfte 32 vereinigt. Bei einer Gelenkbewegung um die Achse 28 entsteht eine Relativbewegung der Lamellen 52 in der Ringwanne 46. Die Lamellen 52 und Ringwanne 46 bilden zugleich ein elektrisches Polpaar. Die Ringwanne 46 ist hierfür mit einem elektrischen Anschluß 56 und der Lamellenring 50 mit einem elektrischen Anschluß 60 verbunden. Wird an die Anschlüsse 56 und 60 eine Spannung angelegt, ändert sich proportional zur Spannung die Viskosität der elektroviskosen Flüssigkeit 48 zwischen einem flüssigen und einem festen Zustand mit mehr oder weniger zähen Zwischenstellungen. Im flüssigen Zustand bewegen sich die Lamellen 52 des Lamellenrings 50 in Umfangsrichtung leicht in der Ringwanne 46, sobald das Gelenk um seine Gelenkachse 28 bewegt wird. Die Flüssigkeit setzt im flüssigen Zustand nur einen bewegungsdämpfenden kleinen Widerstand der Bewegung entgegen. Das Gelenk ist im wesentlichen frei beweglich. Ändert sich mit geänderter Spannung die Viskosität, so wird die Flüssigkeit 48 zunächst zäh und hemmt die Gelenkbewegung. Das Gelenk wird in diesem Zwischenstadium schwergängig, was manchmal erwünscht ist. Bei weiterer Spannungsänderung wird die elektroviskose Flüssigkeit 48 fest und die beiden Gelenkteile sind in der jeweiligen Stellung zueinander fixiert.

Die elektrische Einstellung der Viskosität der elektroviskosen Flüssigkeit kann in beliebiger Weise erfolgen. Zweckmäßigerweise wird sich die bekannte Technik so anwenden lassen, daß über am Leuchtenkörper angeordnete Griffe, die mit einer Sensorschaltung verbunden sind, die Zähigkeit so gesteuert werden kann, daß bei Nichtberühren des Griffes die elektroviskose Flüssigkeit einen zähen, d.h. praktisch festen Zustand annimmt, d.h., daß das entsprechende Gelenk fixiert ist. Durch Griffbetätigung wird dann ein Übergang zu einer gewissen Leichtflüssigkeit erzielt, wobei jeder Leuchtenkörper auch mit seinem freiwerdenden d.h. nicht ausbalancierten Gewicht sich in einem sicheren Handgriff befindet, so daß der Leuchtenkörper von Hand leicht in eine andere Position verstellt werden kann, in der er nach Loslassen des Griffes durch die sich wieder einstellende Zähigkeit der elektroviskosen Flüssigkeit arretiert wird.

## Patentansprüche

1. Medizinische Leuchte, insbesondere Operationsleuchte mit mindestens einem Arm, der durch mehrere einachsige aus mehreren Teilen bestehenden Gelenke (20, 24, 26) unterteilt ist, wobei an dessen einem Ende ein Leuchtenkörper befestigt ist und dessen anderes Ende ortsfest gehalten ist, wobei der Arm einen Federausgleich zur Ausbalancierung des Leuchtenkörpers bei Verstellung aufweist und wobei die Arretierung der Gelenke elektrisch veränderbar ist, wobei das Lösen oder Fixieren durch einen Schalter auslösbar ist, dadurch gekennzeichnet, daß einzelne oder mehrere der Gelenke (20, 24, 26) eine konzentrisch zur Gelenkachse (28), angeordnete, flüssigkeitsdicht gekapselte Ringwanne (46) aufweisen, die mit einem Gelenkteil (32) verbunden ist und die mit einer elektroviskosen Flüssigkeit (48) gefüllt ist, in die Teile (50) des anderen Gelenkteiles (34) hineinragen, wobei die Rinwanne (46) und die Teile (50) ein Polpaar zum Anlegen einer Spannung an die elektroviskose Flüssigkeit (48) bilden, deren Spannung über den Schalter einstellbar ist.

2. Leuchte nach Anspruch 1, dadurch gekennzeichnet, daß die Teile (50) von einem Ring in den Ringkanal (46) wegragende Flächenteile (52) sind, die jedes für sich in einer radialen und axialen Ebene verlaufen.

3. Leuchte nach Anspruch 2, dadurch gekennzeichnet, daß der Ring (50) ein Lamellenring ist, dessen Flächenteile (52) aus dem Ringmaterial die Lamel len bilden.

4. Leuchten nach einem der Ansprüche 1 bis 3, dadurch gekennzeichnet, daß eines der Gelenkteile eines Gelenkes ein radial nach innen verlaufendes Gelenkrohr (38) aufweist, das verschraubt ist, in dem sich in einer dem anderen Gelenkteil zugewandten radialen Fläche mit radialem Abstand zu den Umfangsflächen des Gelenkteil (32) ein ringsherum verlaufender Ringkanal (36) zur Aufnahme einer Ringwanne (46) für die elektroviskose Flüssigkeit (48) befindet, und daß das andere Gelenkteil aus einem radial außen verlaufenden Gelenkrohr (44) besteht, welches mit einem Ringteil (34) verschraubt ist, auf dem sich auf einer dem ersten Gelenkteil zugewandten radialen Fläche mit annähernd demselben radialen Abstand zu den Umfangsflächen der beiden Gelenkteile (32,34) ein ringsherum verlaufender Lamellenring (50) befindet, dessen Lamellen (52) in die elektroviskose Flüssigkeit (48) eintauchen, wobei die beiden zugewandten radialen Flächen die Ringwanne (46) abdichten.

5. Leuchte nach einem der Ansprüche 1 bis 4, dadurch gekennzeichnet, daß sowohl die Ringwanne (46) als auch die Teile (50) gegenüber dem Gelenkteil (32) elektrisch isoliert sind und durch die Gelenkteile (32,34) hindurch elektrisch angeschlossen sind.

6. Operationsleuchte nach einem der Ansprüche 1 bis 5, dadurch gekennzeichnet, daß der Schalter steuerbar ist und mit seinem Steuereingang an einen Sensor im Bereich des Leuchtenkörpers angeschlossen ist.

## Claims

1. A medical light, in particular an operation light with at least one arm, which is subdivided by several uniaxial joints (20,24,26) consisting of several parts, in which at its one end a light body is attached and the other end of which is fixedly held, in which the arm has a spring compensation to balance out the light body on adjustment, and in which the arresting of the joints is changeable electrically, in which the loosening or fixing is able to be triggered by a switch, characterised in that individual or several of the joints (20,24,26) have an annular trough (46) arranged concentrically to the joint axis (28) and encased in a fluid-tight manner, which trough (46) is connected with a joint part (32) and which is filled with an electro-viscous fluid (48), into which parts (50) of the other joint part (34) project, in which the annular trough (46) and the parts (50) form a pair of poles for the application of a voltage to the electro-viscous fluid (48), the voltage of which is adjustable via the switch.

2. A light according to Claim 1, characterised in that the parts (50) are surface elements (52) projecting from a ring into the annular channel (46), which each run on their own in a radial and axial plane.

3. A light according to Claim 2, characterised in that the ring (50) is a lamellar ring, the surface elements (52) of which form the laminations from the ring material.

4. Lights according to one of Claims 1 to 3, characterised in that one of the joint parts of a joint has an articulated tube (38) running radially inwardly, which is screwed, in which there is situated in a radial surface facing the other joint part, at a radial distance from the circumferential surfaces of the joint part (32), an annular channel (36) running all around to receive an annular trough (46) for the electro-viscous fluid (48), and that the other joint part consists of an articulated tube (44) running radially externally, which is screwed with an annular part (34) on which there is situated, on a radial surface facing the first joint part, with approximately the same radial distance from the circumferential surfaces of the two joint parts (32,34), a lamellar ring (50) running all around, the laminations (52) of which are immersed into the electro-viscous fluid (48), in which the two radial surfaces facing each other seal the annular trough (46).

5. A light according to one of Claims 1 to 4, characterised in that both the annular trough (46) and also the parts (50) are electrically insulated with respect to the joint part (32) and are connected electrically through the joint parts (32,34).

6. A light according to one of Claims 1 to 5, characterised in that the switch is able to be controlled and is connected by its control input to a sensor in the region of the light body.

## Revendications

1. Lampe médicale, en particulier lampe d'opération équipée au moins d'un bras, qui est subdivisé en articulations se composant de plusieurs parties uniaxiales (20, 24, 26), à une extrémité duquel est fixé un corps de lampe et à l'autre extrémité duquel est fixée de façon fixe le bras présentant une compensation élastique en vue de l'équilibrage du corps de la lampe, lors d'un déplacement et le blocage de l'articulation pouvant être modifié électriquement, le dégagement ou la fixation pouvant être déclenché par un commutateur, caractérisée en ce que l'une ou plusieurs des articulations (20, 24, 26) présentent une cuve annulaire hermétique aux liquides, disposée concentriquement à l'axe d'articulation (28), qui est reliée à une partie d'articulation (32) et est remplie d'un liquide électro-visqueux (48), dans laquelle pénètrent des éléments (50) de l'autre partie d'articulation (34), la cuve annulaire (46) et les parties (50) formant une paire de pôles en vue de l'application d'une tension au liquide électro-visqueux (48), dont la tension est réglable par l'intermédiaire d'un commutateur.

2. Lampe selon la revendication 1, caractérisée en ce que les éléments (50) d'une bague sont des parties planes (52) s'écartant dans la canal annulaire (46), qui s'étendent chacune dans un plan radial et axial.

3. Lampe selon la revendication 2, caractérisée en ce que la bague (50) est une bague à lamelles, dont les parties planes (52) constituent les lamelles à partir du matériau de la bague.

4. Lampe selon l'une des revendications 1 à 3, caractérisée en ce que l'une des parties d'une articulation présente un tube d'articulation (38) s'étendant vers l'intérieur, qui est vissé, dans lequel se trouve dans une partie radiale tournée vers l'autre partie d'articulation avec un écartement radial par rapport aux surfaces périphériques de la partie d'articulation (32) un canal annulaire s'étendant tout autour (36) en vue de la réception d'une cuve annulaire (46) pour le liquide électro-visqueux, et en ce que l'autre partie d'articulation se compose d'un tube d'articulation (44) s'étendant radialement vers l'extérieur, qui est vissé à une partie annulaire (34), dans laquelle sur une surface radiale tournée vers la première partie d'articulation avec sensiblement le même écartement radial par rapport aux surfaces périphériques des deux parties d'articulation (32, 34), se trouve une bague à lamelles (50) s'étendant périphériquement, dont les lamelles (52) plongent dans le liquide électro-visqueux, les deux surfaces radiales tournées vers celles-ci rendant étanche la cuve annulaire (46).

5. Lampe selon l'une des revendications 1 à 4, caractérisée en ce que, non seulement la cuve annulaire (46), mais également les parties (50), sont isolées électriquement vis-à-vis de la partie d'articulation (32) et sont reliées électriquement par l'intermédiaire des parties d'articulation (32, 34).

6. Lampe d'opération selon l'une des revendications 1 à 5, caractérisée en ce que le commutateur peut être commandé et est relié par son entrée de commande à un capteur à proximité du corps de lampe.
